# EUROPÄISCHE PATENTSCHRIFT

(11) **EP 2 570 968 B1**
(45) Veröffentlichungstag und Bekanntmachung des Hinweises auf die Patenterteilung: **26.12.2018**
(21) Anmeldenummer: 12180448.8
(22) Anmeldetag: 14.08.2012
(51) Int. Cl.: G06T 7/00, G06T 7/11, G06T 7/187

(54) **Verfahren und Anordnung zur optischen Beurteilung von Erntegut in einer Erntemaschine**
Method and assembly for optically evaluating harvested goods in a harvesting machine
Procédé et agencement pour l'évaluation optique de produits agricoles dans une moissonneuse

(30) Priorität: 19.09.2011 DE 102011082908
(43) Veröffentlichungstag der Anmeldung: 20.03.2013
(73) Patentinhaber: Deere & Company, Moline, IL 61265 (US)
(72) Erfinder: Brückner, Dr., Peter, 98527 Suhl (DE); Lerm, Steffen, 98693 Ilmenau (DE); Garten, Dr., Daniel, 98617 Untermaßfeld (DE); Holder, Silvio, 98667 Schönbrunn (DE)
(74) Vertreter: Holst, Sönke

(56) Entgegenhaltungen:
- EP-A2- 2 057 882
- DE-A1-102004 063 769
- US-A- 5 917 927

## Beschreibung

Die vorliegende Erfindung bezieht sich auf ein Verfahren und eine Anordnung zur optischen Beurteilung von Erntegut nach den Oberbegriffen der Ansprüche 1 und 11.

### Stand der Technik

Mähdrescher sind große Maschinen, die Korn von einem Feld ernten, dreschen und reinigen. Ein Mähdrescher umfasst eine Anzahl verstellbarer Elemente, wie die Größe der Öffnungen eines Dreschkorbs oder eines Trennrosts, die Größe eines Dreschspalts, die Drehzahl einer Dreschtrommel, die Geschwindigkeit eines Reinigungsgebläses oder die Position von Lamellen eines Siebs. Der optimale Arbeitsparameter dieser Elemente hängt von der Erntegutart und dessen Eigenschaften ab und kann sich mit der Zeit verändern. Die Einstellung dieser Parameter wird üblicherweise durch den Bediener des Mähdreschers basierend auf Bedienungsanleitungen oder seiner Erfahrung oder automatisch durchgeführt, unter Verwendung von in einem Speicher abgelegten Werten, die durch den Bediener abhängig von den aktuellen Umgebungs- und Erntegutbedingungen abgerufen werden. In der Vergangenheit wurden viele Sensoren zur Erfassung von Ernteguteigenschaften (wie kapazitive Feuchtigkeitssensoren, Kameras und Nahinfrarotspektrometer) vorgeschlagen, um Ernteguteigenschaften an Bord des Mähdreschers zu erfassen und dem Bediener eine Indikation über die derzeit vorliegenden Eigenschaften des Ernteguts nach einer Bearbeitung in der Erntemaschine zu geben, basierend auf denen er (oder eine selbsttätige Steuerung) Parameter des Bearbeitungsprozesses in der Erntemaschine verändern kann. So kann er beispielsweise den Dreschspalt vergrößern und die Drehzahl der Dreschtrommel vermindern, wenn der Bruchkornanteil zu hoch ist.

Zur Gewinnung von Informationen zur manuellen oder automatischen Einstellung von Parametern des Bearbeitungsprozesses eines Mähdreschers eignet sich besonders eine Kamera, die beispielsweise ein Bild des gereinigten Korns erfasst, bevor es in den Korntank gelangt, oder ein Bild des Materials im Überkehrförderer, der Erntegut vom rückwärtigen Ende eines Siebes wieder dem Dreschvorgang oder einem separaten Nachdrescher zuführt. Da ein unbearbeitetes Bild insbesondere für wenig erfahrene Bediener kaum aussagekräftig ist, wird das Bild in der Regel mittels eines elektronischen Bildverarbeitungssystems verarbeitet, um einerseits dem Bediener bestimmte Partikel, wie Bruchkorn oder Verunreinigungen im dargestellten Bild des Ernteguts farblich oder auf andere Weise hervorgehoben anzuzeigen und andererseits quantitative Größen (beispielsweise hinsichtlich des Bruchkorn- und/oder Verunreinigungsanteils) anzeigen zu können. Diese quantitativen Größen können, wie bereits erwähnt, zur manuellen oder automatischen Einstellung von Parametern des Bearbeitungsprozesses in der Erntemaschine herangezogen werden.

Die EP 2 057 882 A2 beschreibt einen Mähdrescher mit einem derartigen Bildverarbeitungssystem, das an den aufgenommenen, digitalisierten Bilddaten zunächst einen Helligkeitsausgleich durchführt. Das Bild wird dann einer regionen- oder kantenorientierten Segmentierung unterzogen. Bei einer regionenorientierten Segmentierung können Verfahren wie Region Growing, Region Splitting, Pyramid Linking oder Split and Merge verwendet werden. Bei einer dann folgenden Einzelobjekteorientierten Segmentierung wird das Bild in durch in sich gleiche Helligkeits- oder Farbwerte definierte Einzelobjekte zerlegt. Anhand eines Vergleichs der Helligkeit der jeweiligen Region mit einem Sollwert oder einem Mittelwert der Helligkeit des Bildes wird darauf geschlossen, ob die Region ein Bruchkorn repräsentiert. Die Fläche des Bruchkorns wird durch Zählen der Pixel der Region ermittelt und anhand eines Vergleichs mit der Pixelzahl des Bildes wird der Bruchkornanteil evaluiert. Die kantenorientierte Segmentierung dient zur Identifizierung von Bruchkorn und beruht auf einer Beurteilung der Längen der Grenzen der Einzelobjekte. Bei ausreichender Größe des Objekts wird davon ausgegangen, dass es sich um ein Stück Kurzstroh handelt. Die Flächen der als Kurzstroh identifizierten Objekte werden ebenfalls in Relation zur Größe des gesamten Bildes gesetzt, um den Anteil der Verunreinigungen zu ermitteln. Die Zuordnung der Bildobjekte zu den Klassen "Bruchkorn" oder "Kurzstroh" erfolgt demnach lediglich anhand der Helligkeit der Einzelobjekte bzw. ihrer Länge. Hierbei sind Ungenauigkeiten kaum zu vermeiden, denn beispielsweise können Kurzstrohpartikel, die kleiner als die Körner sind, nicht ermittelt werden. Analog werden Bruchkörner mit nicht frontal zur Kamera liegenden Bruchflächen nicht von intaktem Korn unterschieden. Die EP2232978 A1 beschreibt einen Feldhäcksler umfassend einer Sensoreinrichtung, welche eine Kamera und ein damit verbundenes Bildverarbeitungssystem enthält, wobei die Kamera auf den Erntegutstrom blickt, und das Bildverarbeitungssystem Körner im Erntegutstrom auf Basis von Farbmerkmalen identifiziert und auf Basis von Formmerkmalen in aufgebrochene und nicht aufgebrochene Körner klassifiziert, um den Anteil letzterer im Erntestrom abzuleiten.

Die US 5 917 927 A1 beschreibt eine stationäre Anordnung zur Ermittlung des Bruchkornanteils von Reis, bei der aus dem aufgenommen Bild die Abmessungen (Länge, Breite und Fläche) und möglicherweise noch andere Abmessungen jedes Korns ermittelt werden. Eine Klassifizierung des Korns erfolgt durch den Vergleich mit Daten aus einer Tabelle, in der simulierte oder aktuell gemessene Daten für Korn abgelegt sind, die anhand von Kombinationen von Merkmalen des jeweiligen, zu untersuchenden Korns abgerufen werden. Auch hier erfolgt die Klassifizierung nur anhand der Abmessungen des jeweiligen Objekts, was die bereits im vorhergehenden Absatz erwähnten Nachteile mit sich bringt.

Die als gattungsbildend angesehene DE 10 2004 063 769 A1 beschreibt ein Verfahren und eine Vorrichtung zum automatischen und quantitativen Erfassen der Qualität von Saatgut oder Körnerfrüchten. Das zu untersuchende Material wird auf einer transparenten Transportvorrichtung abgelegt und mittels einer Kamera wird ein Bild davon aufgenommen. Dann wird das Bild in einen Hintergrund und die Getreidekörner unterteilt, d.h. ein Binärbild erzeugt, das zwischen dem Hintergrund und den Körnern unterscheidet. Dieses Binärbild wird durch morphologische Filter, wie Dilatation und Erosion bearbeitet, um als Ergebnis geschlossene Flächen gleicher Farbintensität zu erzeugen, und dient schließlich dazu, die Getreidekörner aus dem Bild herauszuschneiden. Die Bilder der Körner werden dann auf bestimmte Merkmale untersucht (Form, Farbe, Kanten, Textur und Position eines Merkmals im Objekt). Anhand der zugeordneten Merkmale und einer vorhandenen Datenbank, in der entsprechende Merkmale zuvor untersuchter, klassifizierter Körner eingetragen sind, werden die einzelnen Körner dann klassifiziert.

### Aufgabe

Es ist eine Aufgabe der vorliegenden Erfindung, ein gegenüber dem Stand der Technik verbessertes Verfahren zur optischen Beurteilung von Erntegut in einer Erntemaschine und eine entsprechende Anordnung bereitzustellen.

### Lösung

Diese Aufgabe wird durch die Lehren der Ansprüche 1 und 11 gelöst, wobei die untergeordneten Ansprüche vorteilhafte Ausführungsformen beschreiben.

Bei einem Verfahren und einer Anordnung zur optischen Beurteilung von Erntegut wird zunächst ein Bild des Ernteguts mit einer Kamera aufgenommen, welche durch eine für sichtbares Licht transparente Scheibe in einen Kanal blickt, in dem Erntegut innerhalb einer Erntemaschine gefördert wird, sodass einem elektronischen Bildverarbeitungssystem (online) ein digitales Bild des Ernteguts vorliegt. Das Bildverarbeitungssystem identifiziert dann Einzelobjekte in dem Bild und klassifiziert mittels des Bildverarbeitungssystems die Einzelobjekte anhand eines Vergleichs von Farb- und/oder Kontur- und/oder Texturmerkmalen der Einzelobjekte mit entsprechenden Eigenschaften von in einer Datenbank abgelegten Referenzobjekten in vorbestimmte Objektklassen. Die absoluten und/oder relativen Anzahlen und/oder Flächen der den jeweiligen Objektklassen zugeordneten Einzelobjekte werden berechnet und vorzugsweise schließlich auf einer Anzeigeeinrichtung angezeigt und/oder auf andere Weise, z. B. akustisch, zur Kenntnis gegeben.

Das Bild wird mittels einer binären Schneidmaske in Einzelobjekte und Hintergrund aufgeteilt und nur die Einzelobjekte werden weiterverarbeitet.

Die Einzelobjekte werden größenabhängig weiterverarbeitet, über einem Schwellenwert einer oder mehrerer Abmessungen liegende Einzelobjekte durch eine lokale Helligkeitsskalierung und eine Anwendung einer Schneidmaske mit schärferen Diskriminationsparametern als bei der vorherigen Anwendung der Schneidmaske in mehrere Einzelobjekte aufgeteilt werden und/oder es erfolgen verschiedene Teilprozessschritte, die mindestens 2 oder mehr Einzelobjekte anhand spezifischer Einzelobjektemerkmale fusionieren.

Durch die so aufgearbeiteten Einzelobjekte der Schneidmaske können die Einzelobjekte mittels Koordinaten der Schneidmaske aus dem Ursprungsbild ausgeschnitten werden und alle objektfremden Pixel im Einzelobjektbild werden darin durch einen neutralen Farbtupel repräsentiert. Als letzter Block werden mehrere Merkmale im mehrkanaligen Einzelobjektbild berechnet und durch Zugriff auf eine Datenbank klassifiziert. Das Ergebnis der Klassifikation wird dann in geeigneter Form dem Bediener zur Verfügung gestellt.

Der Vergleich zwischen den Referenzobjekten in der Datenbank und den Einzelobjekten im aufgenommenen Bild erfolgt anhand der Farbe, der Kontur (der Form) und der Textur der Objekte. Hier wird beispielsweise ausgenutzt, dass Stroh und Kaff im Allgemeinen eine andere Farbe haben als die reinen Körner, und die Bruchflächen von Körnern wiederum eine andere Farbe haben als unbeschädigte Körner. Analog haben Strohpartikel im Allgemeinen rechteckige Konturen mit ausgefransten Abrisskanten, während Körner eine eher runde oder ovale Form haben, die bei Bruchkörnern nicht vollständig vorhanden ist. Die Textur der reinen Körner ist im Allgemeinen relativ gleichförmig, während Stroh oft mit Längsstreifen versehen ist. Es wird somit eine Anzahl an Eigenschaften der Einzelobjekte mit den Eigenschaften der Referenzobjekte verglichen, die insbesondere in ihrer Gesamtheit eine unproblematische Identifizierung und Klassifizierung erlauben. Dem Bediener der Erntemaschine liegt somit eine Information vor, wie hoch der Anteil der jeweiligen Objektklassen im Erntegut ist, bei denen es sich bei einem Mähdrescher beispielsweise um Bruchkorn oder Fremdobjekte (Verunreinigungen) oder unausgedroschene Körner handeln kann. Basierend auf diesen Anteilen kann der Bediener Einstellungen von Parametern des Bearbeitungsprozesses in der Erntemaschine anpassen und/oder eine Steuerung kann Parameter des Bearbeitungsprozesses in der Erntemaschine anpassen, um die Arbeit des Mähdreschers zu optimieren.

Die Einzelobjekte können größenabhängig weiterverarbeitet werden, indem unter einem Schwellenwert einer oder mehrerer Abmessungen liegende Einzelobjekte als Hintergrund behandelt werden.

Die Datenbank enthält vorzugsweise Eigenschaften manuell klassifizierter Referenzobjekte, die anhand realen Ernteguts aufgenommen wurden, und die zugehörige manuelle Klassifizierung durch einen Experten. Vor der Benutzung auf der Maschine wird auf der Grundlage der Bilder von bekannten Objekten eine Datenbank angelegt (Training). Damit steht dem Benutzer der Maschine mit Hilfe des Bildverarbeitungssystems sofort die für die Erkennung notwendige Vergleichsinformation zur Verfügung.

Da unterschiedliche Arten von Erntegut (z.B. Weizen, Gerste oder Mais) auch unterschiedliche Referenzobjekte implizieren, bietet es sich an, in die Datenbank Eigenschaften von Referenzobjekten unterschiedlicher Arten von Erntegut aufzunehmen. Dem Bildverarbeitungssystem wird (beispielsweise durch den Bediener mittels einer Eingabeeinrichtung oder eines geeigneten Sensors oder durch Vergleich der Bilder der Kamera mit Referenzbildern unterschiedlicher Erntegutarten) eine Information hinsichtlich der Art des jeweils gerade untersuchten Ernteguts zugeführt, anhand der es die Eigenschaften der Referenzobjekte des jeweiligen Ernteguts aus der Datenbank entnimmt.

Für die einzelnen Klassen wird prozentual der im Bild ermittelte Flächenanteil oder die Anzahl der Objekte je Klasse ausgegeben. Die Datenbank kann zusätzlich Korrekturfaktoren enthalten, anhand derer die Anzahlen der den jeweiligen Objektklassen zugeordneten Einzelobjekte in Masseprozente umgerechnet werden können. Durch die klassenspezifischen Korrekturfaktoren kann die Masse einzelner Klassen geschätzt und ausgegeben werden. Damit erreicht man eine Umrechnung der Analyseergebnisse in branchenübliche Masseprozente. Diese Korrekturfaktoren sind in der Datenbank hinterlegt und in der Regel durch empirische Versuche vorher bestimmt worden.

Bei der Bildvorverarbeitung kann das Bild anfangs anhand bildglobaler und bildlokaler Intensitäten helligkeitsskaliert werden.

Die Ergebnisse werden als numerische und/oder grafische Statistik, vorzugsweise als Säulendiagramm dem Bediener zur Verfügung gestellt. Anhand dieser Information kann der Bediener die Steuerungselemente der Erntemaschine variieren. Zusätzlich kann das Bild der Kamera auf einer Anzeigeeinrichtung angezeigt und abhängig von der berechneten Objektklasse farblich gekennzeichneten Darstellungen der identifizierten Einzelobjekte überlagert werden. Das Analyseergebnis wird demnach als Overlaybild dem Bediener zur Verfügung gestellt. Den einzelnen Klassen werden Farben zugeordnet und optional als halbtransparente Schicht über das für die Berechnung grundlegende Bild gelegt. Der Bediener kann somit erkennen, ob die Zuordnung der Einzelobjekte zu den einzelnen Objektklassen korrekt erfolgt ist und entscheiden, wie gut die Berechnung der Schneidmaske und die Klassifikation der extrahierten Einzelobjekte ist und somit ggf. Parameter des Algorithmus anpassen, indem er z. B. die Helligkeitsschwelle ändert, ab der ein Einzelobjekt als solches erkannt wird, oder die Größe, ab der ein Einzelobjekt nicht mehr als Untergrund
angesehen wird, um den Bildverarbeitungsprozess zu optimieren. Sollten Parameter des Algorithmus durch den Bediener verändert werden, so erfolgen eine weitere Analyse des gleichen Bildes und die Darstellung des Ergebnisses. Der Bediener kann so ohne Kenntnis des Analyseablaufs die Erkennungsgüte manuell durch "Trial and Error" verbessern.

Diese und andere Aufgaben, Merkmale und Vorteile der vorliegenden Erfindung werden dem Fachmann nach dem Lesen der folgenden detaillierten Beschreibung und angesichts der Zeichnungen offensichtlich.

### Ausführungsbeispiel

- Fig. 1: ist eine Seitenansicht einer Erntemaschine.

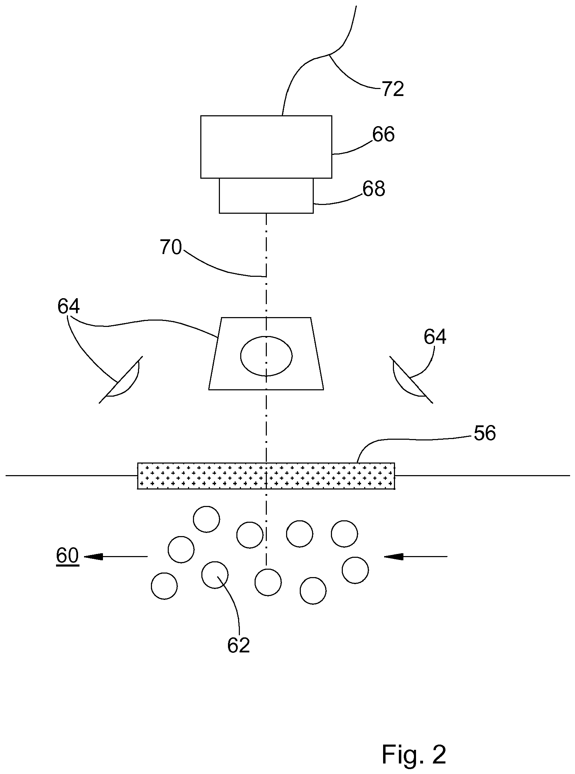

- Fig. 2: ist eine schematische Ansicht eines Bildaufnahmesystems.
- Fig. 3: zeigt ein Flussdiagramm, nach dem das Bildverarbeitungssystem arbeitet.
- Fig. 4: zeigt ein Kamerabild mit Darstellung der identifizierten Objekte.

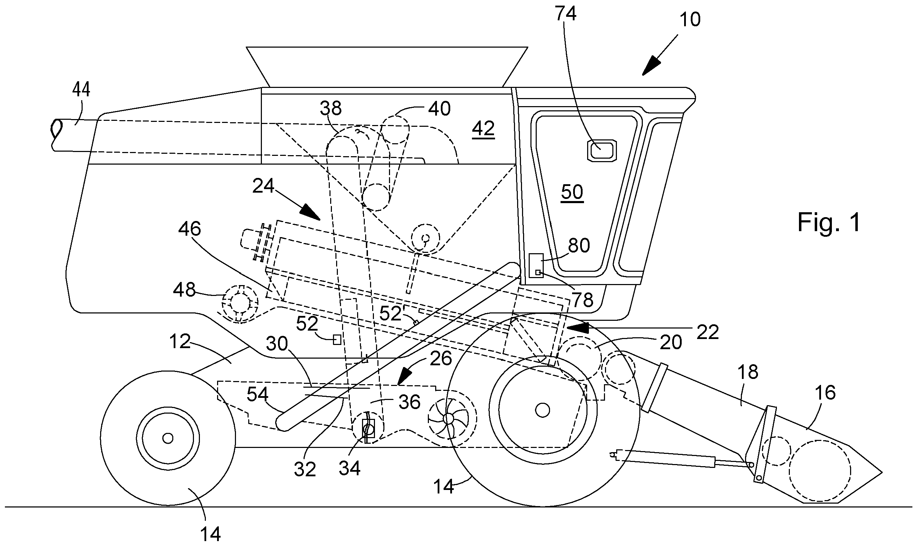

Es wird nun auf die Figur 1 verwiesen, in der eine landwirtschaftliche Erntemaschine in der Form eines Mähdreschers 10 gezeigt wird, welcher einen Hauptrahmen 12 mit angetriebenen vorderen und lenkbaren rückwärtigen, im Bodeneingriff befindlichen Rädern 14 umfasst, welche den Hauptrahmen 12 zur Vorwärtsbewegung über ein abzuerntendes Feld abstützen. Obwohl Räder 14 gezeigt werden, kann der Mähdrescher 10 komplett oder teilweise auf im Bodeneingriff befindlichen Raupenlaufwerken abgestützt werden. Der Antrieb der vorderen Räder 14 erfolgt durch ein konventionelles hydrostatisches Getriebe von einem am Hauptrahmen befestigten Verbrennungsmotor. Im Folgenden beziehen sich Richtungsangaben (wie vorwärts) auf die Vorwärtsrichtung des Mähdreschers 10, die in der Figur 1 nach rechts verläuft.

Ein vertikal verstellbarer Erntevorsatz in der Form eines Schneidwerks 16 wird verwendet, um Erntegut abzuernten und es einem Schrägförderer 18 zuzuführen. Der Schrägförderer 18 ist schwenkbar am Hauptrahmen 12 angelenkt und umfasst einen Förderer, um das eingefahrene Erntegut einer Leittrommel 20 zuzuführen. Die Leittrommel 20 fördert das Erntegut durch einen Einlassübergangsabschnitt 22 nach oben zu einem rotierenden Dresch- und Trennzusammenbau 24. Es können auch andere Orientierungen und Typen von Dreschstrukturen und andere Typen von Erntevorsätzen 16 verwendet werden, wie ein sich quer erstreckender Rahmen, der einzelne Reiheneinheiten abstützt.

Beim Erntebetrieb drischt und trennt der rotierende Dresch- und Trennzusammenbau 24 das Erntegut. Korn und Kaff fallen durch Roste am Boden des rotierenden Dresch- und Trennzusammenbaus 24 in ein Reinigungssystem 26. Das Reinigungssystem 26 umfasst ein Gebläse 28, obere Siebe 30 und untere Siebe 32, die das Kaff abtrennen. Das saubere Korn wird über die Breite des Reinigungssystems 26 durch eine Querförderschnecke 34 zusammengeführt, die es einem Elevator 36 für sauberes Korn zuführt. Der Elevator 36 umfasst Ketten und Paddel und fördert das saubere Korn in einen Übergangsabschnitt 38, von dem ausgehend es durch eine Korntankbefüllschnecke 40 in einen Korntank 42 gefördert wird. Das saubere Korn im Korntank 42 kann durch einen Entladeschneckenförderer 44 auf einen Kornwagen oder Lastwagen überladen werden. Überkehr wird vom rückwärtigen Ende des unteren Siebs 32 durch einen Überkehrelevator 54 an den rotierende Dresch- und Trennzusammenbau 24 zurückgegeben.

Ausgedroschenes, getrenntes Stroh wird vom rotierenden Dresch- und Trennzusammenbau 24 durch einen Auslass 46 einem Abgabeförderer 48 übergeben. Der Abgabeförderer stößt das Stroh wiederum an der Rückseite des Mähdreschers 10 aus. Es ist anzumerken, dass der Abgabeförderer 48 das von Korn verschiedene Material direkt einem Strohhäcksler zuführen könnte. Der Betrieb des Mähdreschers 10 wird von in einer Bedienerkabine 50 aus gesteuert.

Zur optischen Untersuchung des Ernteguts und zur darauf basierenden Beurteilung des Dresch-, Trenn- und Reinigungsprozesses des Mähdreschers 10 ist ein Bildaufnahmesystem 52 vorgesehen. Es kann an der hochlaufenden Seite des Elevators 36 angeordnet sein und dort den Strom des Korns in den Korntank 42 überwachen oder als Bildaufnahmesystem 52' am Überkehrelevator 54 positioniert sein und dort den Überkehrerntegutstrom überwachen. Es wäre auch denkbar, ein Bildaufnahmesystem (nicht gezeigt) an einer Messkammer anzubringen, in die Erntegut diskontinuierlich eingefüllt und wieder daraus entnommen wird, wie sie in der US 6 285 198 B1 oder der EP 0 908 086 A1 gezeigt ist.

Das Bildaufnahmesystem 52 umfasst eine für sichtbares Licht transparente Scheibe 56, die in eine Wand 58 des Erntegut 62 fördernden Kanals 60, bei dem es sich hier um den Elevator 36 oder den Überkehrelevator 54 handelt, eingefügt ist. Die Scheibe 56 ist auf einer oder beiden Seiten mit einer Vergütungsschicht versehen, um unerwünschte Reflexe zu vermeiden. Das Erntegut 62 wird durch mehrere Lichtquellen 64 beleuchtet, die kreisförmig um die optische Achse 70 der Scheibe 56 verteilt sind. Die Lichtquellen 64 können als Glühlampen, Blitzleuchten, Ringblitzleuchte oder vorzugsweise als Leuchtdioden ausgeführt sein. Die Lichtquellen 64 sind in einem Winkel zur optischen Achse geneigt. Ein Objektiv 68 einer Kamera 66 ist ebenfalls auf der optischen Achse 70 der Scheibe 56 angeordnet und blickt auf das Erntegut 62 im Kanal 60.

Die Kamera 66 hat einen digitalen Ausgang, der mittels eines Kabels 72 mit einem elektronischen Bildverarbeitungssystem 80 verbunden ist, das seinerseits mit einer Anzeigeeinrichtung 74 verbunden ist.

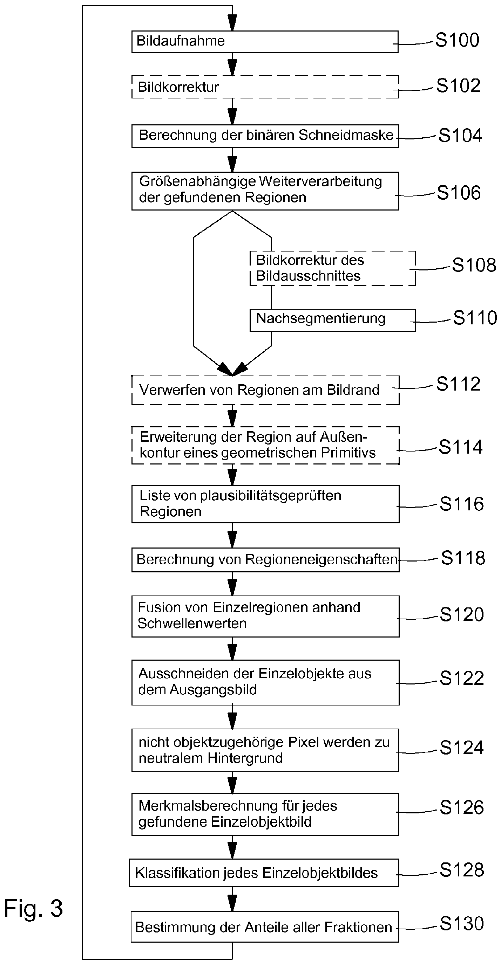

Die Figur 3 zeigt ein Flussdiagramm, nach dem das Bildverarbeitungssystem 80 arbeitet. Es beinhaltet folgende Schritte:
a) Aufnahme des Erntegutes durch einen Bild-Sensor der Kamera (S100)
b) Bildkorrektur zum Ausgleich von Inhomogenitäten (S102)
c) Berechnung einer binären Schneidmaske, die das Ausgangsbild in Objekte und Hintergrund trennt (S104)
d) Größenabhängige Weiterverarbeitung von zusammenhängenden Einzelobjekte in der Schneidmaske (S106)
e) Berechnung einer Schneidmaske mit schärferen Diskriminationsparametern als bei der ersten Anwendung mit Hilfe der Vorverarbeitung des Bildausschnittes, um große Einzelobjekte in mehrere Einzelobjekte aufzuteilen (S108 bis S110)
f) optionales Verwerfen von Einzelobjekte am Bildrand (S112)
g) optionale Erweiterung der Außenkontur der gefundenen Region durch einen umschreibenden Polygonzug (S114)
h) Erstellung einer Liste von gültigen Objekten, die durch mehrere Plausibilitätskontrollen geprüft werden (S116)
i) Berechnung von Einzelobjekteeigenschaften und ggf. Fusion von Einzelobjekten anhand von Schwellenwerten (S118 bis S120)
j) Ausschneiden der Einzelobjekte aus dem Kameraoriginalbild anhand der Koordinaten der aus der Schneidmaske extrahierten und in den Schritten d bis i) nachbearbeiteten Einzelobjekte (S122) und Einfärbung aller nicht zum Objekt gehörenden Pixel in eine neutrale Farbe (S124)
k) Bestimmung von farb-, textur- und konturbasierten Bildmerkmalen mit anschließender Klassifikation unter zur Hilfenahme einzelner Werte aus der Datenbank (S126 bis S128)
l) Berechnung der Anteile der klassifizierten Objekte zu den Klassen "einwandfrei", "Bruch", "leichte unerwünschte Partikel", "schwere unerwünschte Partikel", "ungedroschene unerwünschte Partikel" und "falsch ausgeschnittene und/oder nicht klassifizierbare Objekte" (S130).

In den Figuren und in der gesamten Beschreibung werden Einzelregionen und Einzelobjekte als synonym angesehen.

Die im Schritt I) (S130) berechneten Anteile werden dem Bediener in der Kabine auf der Anzeigeeinrichtung 74 zur Verfügung gestellt, der dann ggf. anhand der aktuellen Analyseergebnisse die Betriebsparameter des Mähdreschers anpassen kann. Wenn in Schritt I ein unerwünschter Anteil mit einem vorher festgelegten Grenzwert überschritten wird, so erfolgt ein Warnsignal für den Bediener, um diesen zu einer Betriebsparameteranpassung der Erntemaschine aufzufordern. Diese Betriebsparameteranpassung könnte auch automatisch erfolgen.

Das vorliegende Verfahren eignet sich für jedwede Ernte- und Verarbeitungsmaschine, bei der es möglich ist, Bilder des Erntegutvolumenstroms zu machen.

Die (optionale) Bildkorrektur aus Schritt b) (S102) basiert auf einer Umnormierung des Originalkamerabildes anhand bildglobaler und bildlokaler Intensitäten. Die Information zur Klassifikation der Objekte liegt in der relativen Intensitätsänderung benachbarter Pixel. Es ist daher nicht relevant wie groß die Intensität absolut ist, sondern die relative Signatur der Körner im Intensitätsprofil ist relevant. Das Kamerabild wird aus diesem Grunde für weitere Verarbeitungsschritte vorverarbeitet. Zu diesem Zweck werden das Mittelwertbild des Kamerabildes und die durchschnittliche Intensität jedes Farbkanals berechnet. Die Filtergröße des Mittelwertbildes wird dabei an die Objekte im Bild angepasst. Das vorverarbeitete Bild ergibt sich aus einer Addition der durchschnittlichen Intensitäten pro Farbkanal und der Differenz mit dem mittelwertgefiltertem Bild. Die Berechnung des korrigierten Bildes bedarf somit keinerlei Referenzbilder und kann auf jedem Einzelbild durchgeführt werden. Dabei kann das Bild sowohl monochrom als auch mehrkanalig sein. Es ist ebenfalls auch möglich nur ausgewählte Farbkanäle zu korrigieren. Die Korrektur ist hilfreich für die farbintensitäts- und konturabhängige Berechnung der Schneidmaske gemäß Schritt c) (S104).

Die Berechnung der binären Schneidmaske nach Schritt c) (S104) hat zum Ziel die Datenmenge eines jeden Pixels zu reduzieren. Ursprünglich werden Farb- oder Mehrkanalintensitäten mit der bauartbedingten Bittiefe der Kamera verarbeitet. Das Ziel der Segmentierung ist eine Reduktion der Daten von n-Kanälen auf eine binäre Aussage, ob der aktuelle Pixel zu einem Objekt gehört oder nicht. Daher wird das Eingangsbild durch eine dimensionsreduzierende Transformation in ein monochromes Bild umgewandelt. Außerdem wird das 2D Vektordifferenzbildes (vgl. US 6 731 793 B1) des Eingangsbildes berechnet. Dieses wird vom monochromen Bild subtrahiert, um die Kanten zu verstärken. Damit entsteht das Differenzbild. Die Schneidmaske ergibt sich aus einem Vergleich mit dem mittelwertgefiltertem Differenzbild und dem Produkt eines Diskriminationsparameters und dem Differenzbild selbst. Die Filtergröße des Mittelwertbildes wird an den Bildinhalt angepasst. Ergebnis ist eine binäre Schneidmaske. Der uninteressante Hintergrund ist "false" wobei segmentierte Objekte "true" sind.

Die so gefundenen Einzelobjekte der Schneidmaske werden ausschließend gemäß Schritt d) (S106) größenabhängig weiterverarbeitet. Zu kleine und damit nicht plausible Einzelobjekte oder punkt- oder linienförmige Einzelobjekte werden verworfen. Normal große Einzelobjekte werden gespeichert. Zu große Einzelobjekte werden (in den optionalen Schritten S108 bis S110) durch eine lokale Nachsegmentierung durch eine erneute Berechnung einer lokalen Bildkorrektur (nach Schritt S102) und eine lokale Berechnung der binären Schneidmaske mit anderen schärferen Parametern (entsprechend Schritt S104) getrennt. Die so aufgetrennten großen Einzelobjekte werden verworfen und lediglich die aus der Nachsegmentierung gefundenen (Teil-) Einzelobjekte werden gespeichert. Im Schritt S112 werden optional Einzelobjekte verworfen, die am Bildrand liegen, da diese Objekte nicht vollständig mit der Kamera erfasst wurden und so nicht eindeutig klassifizierbar sind.

Sollte die Segmentierung durch innere und/oder äußere Störgrößen nicht zufriedenstellend funktionieren, so kann eine optionale Erweiterung der Einzelobjekteaußenkontur siehe S114 aktiviert werden. Diese erweitert die Außenkontur der Region auf ein umschreibendes Polygon und glättet somit ausgefranste Konturdaten.

Somit ergeben sich für den Schritt S116 vorselektierte Einzelobjekte, die weiteren Plausibilitätsprüfungen unterzogen werden. Das Ergebnis von Schritt S116 ist eine Liste von gültigen plausibilitätsgeprüften Einzelobjekten, die weiterverarbeitet werden.

Von allen geprüften und plausiblen Einzelobjekten werden weitere Merkmale wie z.B. Schwerpunktlage und Orientierung berechnet. Anhand dieser Merkmale werden gegebenenfalls einzelne Einzelobjekte zusammengefasst. Dies geschieht in den Schritten S118 bis S120. Befindet sich ein weiterer Einzelobjekteschwerpunkt in der Nähe der aktuell zu untersuchenden Region und sind die jeweiligen Orientierungen zueinander ähnlich, so werden die Punktwolken beider Einzelobjekte vereinigt und so eine neue Region erzeugt.

Die beiden Elterneinzelobjekte werden nach Übergabe aller wichtigen Metadaten an das Kindeinzelobjekt verworfen.

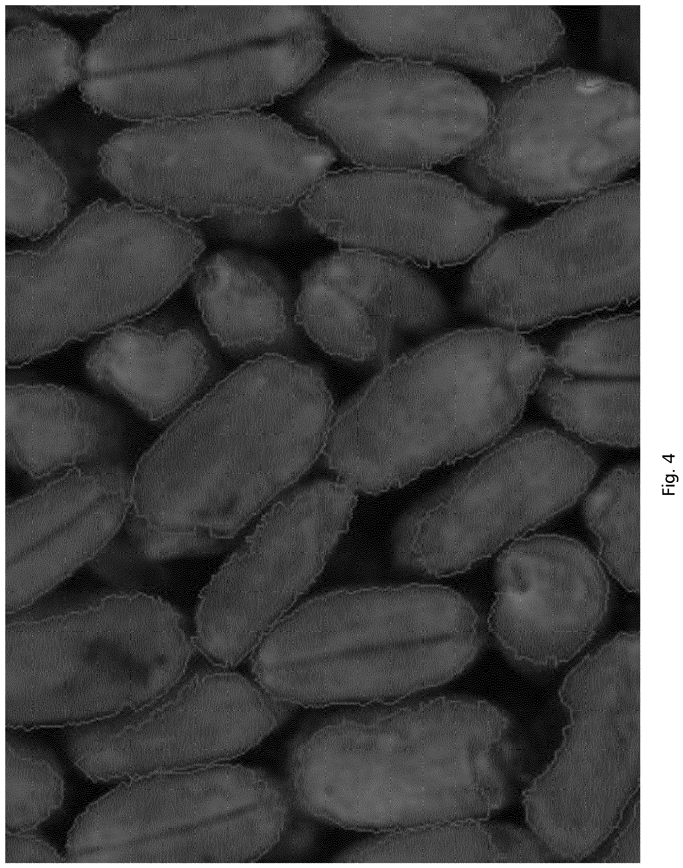

Alle so gespeicherten plausiblen Einzelobjekte eines Bildes (vgl. das in der Figur 4 gezeigte Beispiel) dienen im folgenden Schritt 122 zum Ausschneiden der Originalobjekte aus dem aufgenommenen Kamerabild. Durch die rechteckige Organisation von Bilddaten in Datenverarbeitungsgeräten wird ein umschreibendes Rechteck der Region als Bild angelegt. Dieses Bild wird als Einzelobjektbild bezeichnet. Allen Pixeln des Einzelobjektbildes werden die Farbwerte gemäß des Farbkamerabildes und der Koordinatenliste der Pixel der Schneidmaske zugeordnet. Pixel des Einzelobjektbildes, die entsprechend der korrespondierenden Region der Schneidmaske nicht zum Einzelobjekt gehören, werden im Schritt S124 durch ein neutrales Farbtupel dargestellt. Dieses neutrale Farbtupel beeinflusst im folgenden Klassifikationsschritt (S126, S128) die Klassifizierung nicht.

Bei der Klassifizierung werden im Schritt S126 zuerst eine relativ hohe Anzahl an Merkmalen von jedem gefundenen Einzelobjektbild identifiziert. Diese Merkmale werden unter anderem in die Kategorien Farb-, Kontur- und Texturmerkmale eingeteilt. Anhand einer Datenbank 78 (s. Figur 1) mit vorher einmalig manuell klassifizierten Einzelobjektbildern aus jeder Klasse stehen Merkmalsvektoren aus jeder Klasse zur Klassifizierung zur Verfügung. Anhand dieser Merkmalsvektoren kann nun im Schritt S128 jedes Objekt in die Klassen (z. B. "einwandfrei", "Bruch", "leichte unerwünschte Partikel", "schwere unerwünschte Partikel", "ungedroschene unerwünschte Partikel" und "falsch ausgeschnittene und/oder nicht klassifizierbare Objekte") eingeteilt werden. Anschließend erfolgt die Berechnung der jeweiligen Anteile jeder Klasse (S130). Hier können die absoluten Anzahlen der Objekte in den einzelnen Klassen bestimmt und angezeigt werden, d. h. die Gesamtzahl der Objekte der Klasse in einem Bild, oder ihre relativen Anzahlen, d. h. die Gesamtzahl der Objekte der Klasse in einem Bild geteilt durch die gesamte Anzahl der Objekte im Bild. Auch können die absoluten Flächen der Objekte bestimmt und angezeigt werden, d. h. die summierten Flächen der Gesamtzahl der Objekte der Klasse in einem Bild, oder ihre relativen Flächenanteile, d. h. die die summierten Flächen der Gesamtzahl der Objekte der Klasse in einem Bild geteilt durch die summierten Flächen der Objekte im Bild.

Durch die Analyse von einem oder mehreren Kamerabildern, alternativ an einer vorher bestimmten Anzahl von Kamerabildern oder eines vorher bestimmten Zeitabschnittes wird dem Bediener jeweils das aktuelle Analyseergebnis zur Verfügung gestellt. Dadurch kann der Bediener erkennen, ob seine Änderungen der Betriebsparameter der Ernte- oder Verarbeitungsmaschine zielführend sind oder sich die relative Objektzusammensetzung negativ verändert hat. Durch eine zyklische Analysedarstellung kann weiterhin auf sich ändernde Pflanzen Rücksicht genommen werden. Nicht alle Pflanzen liefern qualitativ gleichwertiges Erntegut, was durch die Erfindung nun selektiver beurteilt werden kann.

## Patentansprüche

1. Verfahren zur optischen Beurteilung von Erntegut, mit folgenden Schritten:
Aufnehmen (S100) eines Bildes des Ernteguts (62) mit einer Kamera (66);
Identifizieren (S104) von Einzelobjekten in dem Bild mittels eines elektronischen Bildverarbeitungssystems (80) durch Aufteilen des Bildes mittels einer binären Schneidmaske in Einzelobjekte und Hintergrund und Weiterverarbeitung nur der Einzelobjekte;
größenabhängiges Weiterverarbeiten (S106) der Einzelobjekte;
Klassifizieren (S128) der Einzelobjekte in vorbestimmte Objektklassen anhand eines Vergleichs von Farb- und Kontur- und Texturmerkmalen der Einzelobjekte mit entsprechenden Merkmalen von in einer Datenbank (78) abgelegten Referenzobjekten mittels des Bildverarbeitungssystems (80);
und Bestimmen (S130) der absoluten oder relativen Anzahlen oder Flächen der den jeweiligen Objektklassen zugeordneten Einzelobjekte,
**dadurch gekennzeichnet, dass** die Kamera (66) durch eine für sichtbares Licht transparente Scheibe (56) in einen Kanal (60) blickt, in dem Erntegut (62) innerhalb einer Erntemaschine (10) gefördert wird;
und dass beim größenabhängigen Weiterverarbeiten (S106) der Einzelobjekte die über einem Schwellenwert einer oder mehrerer Abmessungen liegenden Einzelobjekte durch eine lokale Helligkeitsskalierung und eine Anwendung einer Schneidmaske mit schärferen Diskriminationsparametern als bei der ersten Anwendung der Schneidmaske in mehrere Einzelobjekte aufgeteilt werden (S108, S110) und dass nach dem größenabhängigen Weiterverarbeiten (S106) und vor dem Klassifizieren der Einzelobjekte (S128) die Schwerpunktlage und Orientierung der Einzelobjekte ermittelt und, falls sich ein weiterer Einzelobjekteschwerpunkt in der Nähe der aktuell zu untersuchenden Region befindet und die jeweiligen Orientierungen zueinander ähnlich sind, die Punktwolken beider Einzelobjekte fusioniert werden (S118, S120).

2. Verfahren nach Anspruch 1, wobei beim größenabhängigen Weiterverarbeiten (S106) der Einzelobjekte ferner die unter einem Schwellenwert einer oder mehrerer Abmessungen liegenden Einzelobjekte als Hintergrund behandelt werden.

3. Verfahren nach Anspruch 1 oder 2, wobei die Datenbank (78) Eigenschaften und die zugehörige Klassifizierung manuell klassifizierter Referenzobjekte enthält, die anhand realen Ernteguts aufgenommen wurden.

4. Verfahren nach einem der Ansprüche 1 bis 3, wobei die Datenbank (78) Eigenschaften von Referenzobjekten unterschiedlicher Arten von Erntegut enthält und dem Bildverarbeitungssystem (80) eine Information hinsichtlich der Art des jeweils zu untersuchenden Ernteguts zugeführt wird, anhand der es die Referenzobjekte aus der Datenbank (78) entnimmt.

5. Verfahren nach einem der Ansprüche 1 bis 4, wobei die Datenbank (78) zusätzlich Korrekturfaktoren enthält, anhand derer die Anzahlen der den jeweiligen Objektklassen zugeordneten Einzelobjekte in Masseprozente umgerechnet werden.

6. Verfahren nach einem der vorhergehenden Ansprüche, wobei das Bild anfangs anhand bildglobaler und bildlokaler Intensitäten helligkeitsskaliert und damit vorverarbeitet wird (S102).

7. Verfahren nach einem der vorhergehenden Ansprüche, wobei ermittelte, sich am Bildrand befindliche Einzelobjekte verworfen werden (S112).

8. Verfahren nach einem der vorhergehenden Ansprüche, wobei die segmentierten Einzelobjekte innerhalb der binären Schneidmaske derart nachbearbeitet werden, dass die äußere Kontur der extrahierten Einzelobjekte durch einen Polygonzug erweitert wird (S114).

9. Verfahren nach einem der vorgehenden Ansprüche, wobei das Bild der Kamera (66) auf einer Anzeigeeinrichtung (74) angezeigt und mit abhängig von der ausgewählten Objektklasse farblich gekennzeichneten Darstellungen der identifizierten Einzelobjekte überlagert wird.

10. Verfahren nach einem der vorgehenden Ansprüche, wobei auf einer Anzeigeeinrichtung (74) die ermittelte Zusammensetzung des Ernteguts numerisch und/oder grafisch angezeigt wird.

11. Anordnung zur optischen Beurteilung von Erntegut, umfassend:
eine Kamera (66);
ein Bildverarbeitungssystem (80);
und eine Ausgabeeinrichtung (74) zur Ausgabe der absoluten oder relativen Anzahlen oder Flächen der den jeweiligen Objektklassen zugeordneten Einzelobjekte;
wobei das Bildverarbeitungssystem (80) eingerichtet ist, folgende Schritte durchzuführen:
Aufnehmen (S100) eines Bildes des Ernteguts (62) mit der Kamera (66);
Identifizieren (S104) von Einzelobjekten in dem Bild durch Aufteilen des Bildes mittels einer binären Schneidmaske in Einzelobjekte und Hintergrund und Weiterverarbeitung nur der Einzelobjekte;
größenabhängiges Weiterverarbeiten (S106) der Einzelobjekte; Klassifizieren (S128) der Einzelobjekte in vorbestimmte Objektklassen anhand eines Vergleichs von Farb- und Kontur- und Texturmerkmalen der Einzelobjekte mit entsprechenden Merkmalen von in einer Datenbank (78) abgelegten Referenzobjekten;
und Bestimmen (S130) der absoluten oder relativen Anzahlen oder Flächen der den jeweiligen Objektklassen zugeordneten Einzelobjekte und Zuführen der Anzahlen oder Flächen zur Ausgabeeinrichtung (74),
**dadurch gekennzeichnet, dass** die Kamera (66) durch eine für sichtbares Licht transparente Scheibe (56) in einen Kanal (60) blickt, in dem Erntegut (62) innerhalb einer Erntemaschine (10) gefördert wird,
und dass das Bildverarbeitungssystem (80) eingerichtet ist, beim größenabhängigen Weiterverarbeiten (S106) der Einzelobjekte die über einem Schwellenwert einer oder mehrerer Abmessungen liegenden Einzelobjekte durch eine lokale Helligkeitsskalierung und eine Anwendung einer Schneidmaske mit schärferen Diskriminationsparametern als bei der ersten Anwendung der Schneidmaske in mehrere Einzelobjekte aufzuteilen (S108, S110) und, nach dem größenabhängigen Weiterverarbeiten (S106) und vor dem Klassifizieren der Einzelobjekte (S128) die Schwerpunktlage und Orientierung der Einzelobjekte zu ermitteln und, falls sich ein weiterer Einzelobjekteschwerpunkt in der Nähe der aktuell zu untersuchenden Region befindet und die jeweiligen Orientierungen zueinander ähnlich sind, die Punktwolken beider Einzelobjekte zu fusionieren (S118, S120). .

12. Anordnung nach Anspruch 11, **gekennzeichnet dadurch, dass** die transparente Scheibe (56) in eine Wand (58) des Erntegut (62) enthaltenden Kanals eingefügt ist, wobei die Scheibe (56) auf einer oder beiden Seiten mit einer Vergütungsschicht versehen ist, um unerwünschte Reflexe zu vermeiden, und dass das Erntegut (62) durch mehrere vorzugsweise als Leuchtdioden ausgeführte Lichtquellen (64) beleuchtet wird, die kreisförmig um die optische Achse (70) der Scheibe (56) verteilt und in einem Winkel zur optischen Achse geneigt sind und ein Objektiv (68) der Kamera (66) ebenfalls auf der optischen Achse (70) der Scheibe (56) angeordnet ist und auf das Erntegut (62) im Kanal (60) blickt.

13. Anordnung nach Anspruch 12, **gekennzeichnet dadurch, dass** die transparente Scheibe (56) ferner für ultraviolette Strahlung und/oder für Strahlung im Bereich das nahen Infrarot transparent ist.

14. Erntemaschine (10) mit einer Anordnung nach einem der Ansprüche 11 bis 13.

## Claims

1. Method for the optical assessment of harvested crop, said method including the following steps:
recording (S100) an image of the harvested crop (62) with a camera (66);
identifying (S104) individual objects in the image by means of an electronic image processing system (80) by dividing the image into individual objects and background by means of a binary cutting mask and by only processing the individual objects further;
processing (S106) the individual objects further in a size-dependent manner;
classifying (S128) the individual objects into predetermined object classes by way of comparison between colour features and contour features and texture features of the individual objects and corresponding features of reference objects stored in a database (78) by means of the image processing system (80);
and determining (S130) the absolute or relative numbers or areas of the individual objects assigned to the respective object classes,
**characterized in that** the camera (66) is focussed into a channel (60) through a panel (56) that is transparent to visible light, harvested crop (62) being conveyed in said channel within a harvesting machine (10) ;
and **in that**, when the individual objects are processed further (S106) in a size-dependent manner, the individual objects lying above a threshold value of one or more dimensions are divided into a plurality of individual objects by local brightness scaling and an application of a cutting mask with sharper discrimination parameters than in the case of the first application of the cutting mask (S108, S110) and **in that**, following the size-dependent further processing (S106) and before the classification of the individual objects (S128), the centre of gravity and orientation of the individual objects is established and, should a further individual object centre of gravity be situated in the vicinity of the current region to be examined and the relative orientations be similar to one another, the point clouds of the two individual objects are fused (S118, S120).

2. Method according to Claim 1, wherein when the individual objects are processed further (S106) in a size-dependent manner, the individual objects lying under a threshold value of one or more dimensions are further treated as background.

3. Method according to Claim 1 or 2, wherein the database (78) includes characteristics and the associated classification of manually classified reference objects, which were recorded by way of real harvested crop.

4. Method according to any one of Claims 1 to 3, wherein the database (78) includes characteristics of reference objects of different types of harvested crop and information with regard to the type of harvested crop to be examined in each case is supplied to the image processing system (80), by way of which it gathers the reference objects from the database (78).

5. Method according to any one of Claims 1 to 4, wherein the database (78) additionally includes correction factors, by way of which the numbers of the individual objects assigned to the respective object classes are converted into mass percentages.

6. Method according to any one of the preceding claims, wherein the image is initially brightness-scaled by way of global image and local image intensities and consequently pre-processed (S102).

7. Method according to any one of the preceding claims, wherein established individual objects located at the edge of the image are rejected (S112).

8. Method according to any one of the preceding claims, wherein the segmented individual objects are reworked within the binary cutting mask in such a manner that the outside contour of the extracted individual objects is expanded by a polygonal chain (S114).

9. Method according to any one of the preceding claims, wherein the image from the camera (66) is displayed on a display device (74) and overlaid with representations of the identified individual objects that are colour-marked depending on the selected object class.

10. Method according to any one of the preceding claims, wherein the established composition of the harvested crop is displayed digitally and/or graphically on a display device (74).

11. Arrangement for the optical assessment of harvested crop, said arrangement comprising:
a camera (66);
an image processing system (80);
and an output device (74) to output the absolute or relative numbers or areas of the individual objects assigned to the respective object classes;
wherein the image processing system (80) is configured to carry out the following steps:
recording (S100) an image of the harvested crop (62) with a camera (66);
identifying (S104) individual objects in the image by dividing the image into individual objects and background by means of a binary cutting mask and by only processing the individual objects further;
processing (S106) the individual objects further in a size-dependent manner;
classifying (S128) the individual objects into predetermined object classes by way of comparison between colour features and contour features and texture features of the individual objects and corresponding features of reference objects stored in a database (78);
and determining (S130) the absolute or relative numbers or areas of the individual objects assigned to the respective object classes and supplying the numbers or areas to the output device (74),
**characterized in that** the camera (66) is focussed into a channel (60) through a panel (56) that is transparent to visible light, harvested crop (62) being conveyed in said channel within a harvesting machine (10) ;
and **in that** the image processing system (80) is configured, when the individual objects are processed further (S106) in a size-dependent manner, to divide the individual objects lying above a threshold value of one or more dimensions into a plurality of individual objects by local brightness scaling and an application of a cutting mask with sharper discrimination parameters than in the case of the first application of the cutting mask (S108, S110) and, following the size-dependent further processing (S106) and before the classification of the individual objects (S128), to establish the centre of gravity and orientation of the individual objects and, should a further individual object centre of gravity be situated in the vicinity of the current region to be examined and the relative orientations be similar to one another, to fuse (S118, S120) the point clouds of the two individual objects.

12. Arrangement according to Claim 11, **characterized in that** the transparent panel (56) is inserted into a wall (58) of a channel containing the harvested crop (62), wherein the panel (56) is provided on one or both sides with an antireflective coating in order to avoid unwanted reflections, and **in that** the harvested crop (62) is illuminated by a plurality of light sources (64) which preferably are realized as light-emitting diodes and are distributed in a circular manner about the optical axis (70) of the panel (56) and are inclined at an angle with respect to the optical axis, and a lens (68) of the camera (66) is also arranged on the optical axis (70) of the panel (56) and is focussed on the harvested crop (62) in the channel (60).

13. Arrangement according to Claim 12, **characterized in that** the transparent panel (56) is transparent to ultraviolet radiation and/or to radiation in the near infrared range.

14. Harvesting machine (10) comprising an arrangement according to any one of Claims 11 to 13.

## Revendications

1. Procédé pour l'évaluation optique de produits agricoles, comprenant les étapes consistant à :
acquérir (S100) une image du produit agricole (62) au moyen d'une caméra (66) ;
identifier (S104) des objets individuels dans l'image au moyen d'un système électronique de traitement d'image (80) en divisant l'image en des objets individuels et en un arrière-plan au moyen d'un masque de découpe binaire et en ne soumettant à un traitement ultérieur que les objets individuels ;
soumettre à un traitement ultérieur dépendant de la taille (S106) les objets individuels ;
classer (S128) les objets individuels en classes d'objets prédéterminées sur la base d'une comparaison des caractéristiques de couleur, de contour et de texture des objets individuels présentant des caractéristiques correspondantes d'objets de référence stockés dans une base de données (78) au moyen du système de traitement d'images (80) ; et
déterminer (S130) les nombres ou les superficies absolus ou relatifs des objets individuels affectés aux classes d'objets respectives,
**caractérisé en ce que** la caméra (66) observe à travers une plaque transparente à la lumière visible (56) dans un canal (60) dans lequel le produit agricole (62) est transporté à l'intérieur d'une moissonneuse (10) ; et
**en ce que**, lors du traitement ultérieur dépendant de la taille (S106) des objets individuels, les objets individuels dont une ou plusieurs dimensions se situent au-dessus d'une valeur de seuil sont répartis en plusieurs objets individuels (S108, S110) par une échelle de luminosité locale et par application d'un masque de découpe ayant des paramètres de discrimination plus précis que lors de la première application du masque de découpe ; et
**en ce qu'**après le traitement ultérieur dépendant de la taille (S106) et avant la classification des objets individuels (S128), la position du centre de gravité et l'orientation des objets individuels sont déterminées et, si un autre centre de gravité de l'objet individuel se trouve à proximité de la région actuellement à examiner et si les orientations respectives sont semblables les unes aux autres, les nuages de points des deux objets individuels sont fusionnés (S118, S120).

2. Procédé selon la revendication 1, dans lequel, lors du traitement ultérieur dépendant de la taille (S106) des objets individuels, les objets individuels dont une ou plusieurs dimensions se situent en dessous d'une valeur de seuil sont également traités comme étant un arrière-plan.

3. Procédé selon la revendication 1 ou 2, dans lequel la base de données (78) contient des propriétés et une classification associée d'objets de référence classés manuellement, qui ont été acquises à partir de produits agricoles réels.

4. Procédé selon l'une des revendications 1 à 3, dans lequel la base de données (78) contient des propriétés des objets de référence de différents types de produits agricoles et fournit au système de traitement d'images (80) une information concernant le type de produit agricole à examiner, sur la base de laquelle il extrait les objets de référence de la base de données (78) .

5. Procédé selon l'une des revendications 1 à 4, dans lequel la base de données (78) contient en outre des facteurs de correction sur la base desquels les nombres d'objets individuels affectés aux classes d'objets respectives sont convertis en pourcentages en masse.

6. Procédé selon l'une des revendications précédentes, dans lequel l'image est initialement mise à l'échelle en luminosité sur la base d'intensités globales et locales de l'image et est ainsi prétraitée (S102).

7. Procédé selon l'une des revendications précédentes, dans lequel les objets individuels déterminés situés au bord de l'image sont rejetés (S112).

8. Procédé selon l'une des revendications précédentes, dans lequel les objets individuels segmentés sont soumis à un traitement ultérieur à l'intérieur du masque de découpe binaire de manière à ce que le contour extérieur des objets individuels extraits soit prolongé par un tracé polygonal (S114).

9. Procédé selon l'une des revendications précédentes, dans lequel l'image de la caméra (66) est affichée sur un dispositif d'affichage (74) et superposée à des représentations colorées des objets individuels identifiés en fonction de la classe d'objets sélectionnée.

10. Procédé selon l'une des revendications précédentes, dans lequel la composition déterminée du produit agricole est affichée numériquement et/ou graphiquement sur un dispositif d'affichage (74).

11. Dispositif pour l'évaluation optique de produits agricoles, comprenant :
une caméra (66) ;
un système de traitement d'image (80) ;
et un dispositif de sortie (74) destiné à fournir en sortie les nombres ou les superficies absolus ou relatifs des objets individuels affectés aux classes d'objets respectives ;
dans lequel le système de traitement d'image (80) est conçu pour effectuer les étapes suivantes :
acquérir (S100) une image du produit agricole (62) au moyen de la caméra (66) ;
identifier (S104) des objets individuels dans l'image en divisant l'image en des objets individuels et en un arrière-plan au moyen d'un masque de découpe binaire et en ne soumettant à un traitement ultérieur que les objets individuels ;
soumettre à un traitement ultérieur dépendant de la taille (S106) les objets individuels ;
classer (S128) les objets individuels en classes d'objets prédéterminées sur la base d'une comparaison des caractéristiques de couleur, de contour et de texture des objets individuels présentant des caractéristiques correspondantes d'objets de référence stockés dans une base de données (78) ;
et déterminer (S130) les nombres ou les superficies absolus ou relatifs des objets individuels affectés aux classes d'objets respectives et envoyer les nombres ou les superficies au dispositif de sortie (74),
**caractérisé en ce que** la caméra (66) observe à travers une plaque transparent à la lumière visible (56) dans un canal (60) dans lequel le produit agricole (62) est transportée à l'intérieur d'une moissonneuse (10),
et **en ce que** le système de traitement d'image (80) est conçu, lors du traitement ultérieur dépendant de la taille (S106), pour répartir (S108, S110) les objets individuels dont une ou plusieurs dimensions se situent au-dessus d'une valeur de seuil en plusieurs objets individuels par une échelle de luminosité locale et par application du masque de découpe et, après le traitement ultérieur dépendant de la taille (S106) et avant la classification des objets individuels (S128), pour déterminer la position du centre de gravité et l'orientation des objets individuels et, si un autre centre de gravité de l'objet individuel se trouve à proximité de la région actuellement à examiner et si les orientations respectives sont semblables les unes aux autres, pour fusionner (S118, S120) les nuages de points des deux objets individuels.

12. Dispositif selon la revendication 11, **caractérisé en ce que** la plaque transparente (56) est insérée dans une paroi (58) du canal contenant le produit agricole (62), dans lequel la plaque (56) est revêtue sur une ou les deux faces d'une couche antireflets pour éviter des réflexions indésirables,
et **en ce que** le produit agricole (62) est éclairé par une pluralité de sources lumineuses (64), de préférence sous forme de diodes électroluminescentes, qui sont réparties de manière circulaire autour de l'axe optique (70) de la plaque (56) et sont inclinées selon un certain angle par rapport à l'axe optique et **en ce qu'**un objectif (68) de la caméra (66) est également disposé sur l'axe optique (70) de la plaque (56) et observe le produit agricole (62) dans le canal (60).

13. Dispositif selon la revendication 12, **caractérisé en ce que** la plaque transparente (56) est en outre transparente au rayonnement ultraviolet et/ou à un rayonnement se situant dans le proche infrarouge.

14. Moissonneuse (10) comportant un dispositif selon l'une des revendications 11 à 13.
